# EUROPEAN PATENT APPLICATION

(11) **EP 4 622 236 A1**
(43) Date of publication of application: **24.09.2025**
(21) Application number: 24187978.2
(22) Date of filing: 11.07.2024
(51) Int. Cl.: H04N 1/00

(54) **DOCUMENT TRANSPORT DEVICE AND IMAGE FORMING APPARATUS**

(30) Priority: 19.03.2024 JP 2024043977
(71) Applicant: FUJIFILM Business Innovation Corp., Minato-ku Tokyo (JP)
(72) Inventor: NOGUCHI, Jun, Yokohama-shi, Kanagawa (JP); FUKAMACHI, Takayuki, Yokohama-shi, Kanagawa (JP); FUJII, Ken, Yokohama-shi, Kanagawa (JP)
(74) Representative: Kurig, Thomas

(57) **Abstract**

A document transport device includes a guide member that is disposed on one side of a transport path along which a document placed on a placing table is transported and that has a guide part formed to guide the document along the transport path, and to which at least one of a transport roll that transports the document along the transport path or a detection unit that detects a position of the placing table is attached, and an exterior cover that is attached to cover the guide member and has an exterior surface exposed to an outside.

## Description

### BACKGROUND OF THE INVENTION

### (i) Field of the Invention

The present invention relates to a document transport device and an image forming apparatus.

### (ii) Description of Related Art

In an exterior cover attachment device disclosed in JP1997-90852A, a holder that supports an exterior cover and a hinge device connected to the exterior cover is fixed to a frame chassis so as to be rotationally movable, the holder is attachably and detachably fixed to a housing or the frame chassis via an elastic member, and the exterior cover is tilted so as to be retractable from an upper surface of an image forming apparatus body in conjunction with the rotational movement of the holder.

### SUMMARY OF THE INVENTION

A document transport device includes a guide member that is disposed on one side of a transport path along which a document placed on a placing table is transported and that includes a guide part formed to guide the document along the transport path, and an exterior cover that is attached to cover the guide member and has an exterior surface exposed to an outside.

In the related art, a plurality of transport rolls that transport a document along a transport path and a detection unit that detects a position of a placing table are all attached to an exterior cover. Therefore, in a case where a user wants to remove the exterior cover, the transport rolls and the detection unit have to be removed from the exterior cover.

An object of the present disclosure is to reduce man-hours for removing an exterior cover as compared with a case where transport rolls and a detection unit are all attached to the exterior cover.

According to a first aspect of the present disclosure, there is provided a document transport device including a guide member that is disposed on one side of a transport path along which a document placed on a placing table is transported and that has a guide part formed to guide the document along the transport path, and to which at least one of a transport roll that transports the document along the transport path or a detection unit that detects a position of the placing table is attached, and an exterior cover that is attached to cover the guide member and has an exterior surface exposed to an outside.

According to a second aspect of the present disclosure, in the document transport device according to the first aspect, the guide member may include a body part that is disposed to face the transport path, and a standing part that stands from both end portions of the body part toward the exterior cover in a cross direction crossing a transport direction in which the document is transported and that has a box portion formed in a box shape which is open in the cross direction.

According to a third aspect of the present disclosure, in the document transport device according to the second aspect, the exterior cover may have a plate-shaped upper part that covers the guide member from above and on which a part of the exterior surface is formed, and a plate-shaped side part that extends downward from an end portion of the upper part and that covers the guide member from a side, and on which the other part of the exterior surface is formed, and the box portion may have a bottom plate of which a plate thickness direction is the cross direction and an L-shaped flange portion that stands from an edge portion of the bottom plate and that extends along the upper part and the side part.

According to a fourth aspect of the present disclosure, in the document transport device according to any one of the first to third aspects, an exterior unit including the guide member and the exterior cover may be configured, the exterior unit may be rotatably attached to a device body and may be rotationally moved between a first position at which the document is transportable along the transport path and a second position at which the transport path is opened, and a rotation shaft portion of the exterior unit may be formed in the guide member.

According to a fifth aspect of the present disclosure, in the document transport device according to the fourth aspect, the guide member may include a body part that is disposed to face the transport path, and a standing part that stands from both end portions of the body part toward the exterior cover in a cross direction crossing a transport direction in which the document is transported and that has a box portion formed in a box shape which is open in the cross direction, and a base end portion of the rotation shaft portion may be connected to the box portion, and a shaft may be formed at a distal end portion of the rotation shaft portion.

According to a sixth aspect of the present disclosure, in the document transport device according to the fourth or fifth aspect, an attachment tool that attaches the exterior cover to the guide member may be invisible from the outside in a state in which the exterior unit is moved to the first position.

According to a seventh aspect of the present disclosure, in the document transport device according to the sixth aspect, the attachment tool may be visible from the outside and may be attachable and detachable in a state in which the exterior unit is moved to the second position.

According to an eighth aspect of the present disclosure, in the document transport device according to any one of the first to seventh aspects, the transport roll may be attached to the guide member and may be disposed on an exterior cover side with respect to the transport path, and the document transport device may comprise a tension spring that is wound around the transport roll and has both end portions attached to the guide member so that a tensile force acts on the transport roll and that biases the transport roll against another transport roll disposed on an opposite side of the transport roll with respect to the transport path.

According to a ninth aspect of the present disclosure, in the document transport device according to any one of the first to eighth aspects, the document transport device may further comprise an attachment tool that attaches the exterior cover to the guide member, and the attachment tool may attach the exterior cover to the guide member only in a cross direction crossing a transport direction in which the document is transported.

According to a tenth aspect of the present disclosure, in the document transport device according to any one of the fourth to seventh aspects, a restricting mechanism that restricts or releases movement of the exterior unit, which has moved to the first position, to the second position may be provided, and the restricting mechanism, the transport roll, and the detection unit may be attached to the guide member.

According to an eleventh aspect of the present disclosure, there is provided an image forming apparatus including the document transport device according to any one of the first to tenth aspects; a reading device that reads the document transported by the document transport device; and an image forming unit that forms an image read by the reading device.

With the document transport device according to the first aspect of the present disclosure, man-hours for removing the exterior cover can be reduced as compared with a case where the transport roll and the detection unit are all attached to the exterior cover.

With the document transport device according to the second aspect of the present disclosure, the rigidity of the standing part can be improved as compared with a case where the entire standing part is plate-shaped.

With the document transport device according to the third aspect of the present disclosure, the rigidity of the standing part can be improved as compared with a case where the L-shaped flange portions are spaced apart from each other at corner portions.

With the document transport device according to the fourth aspect of the present disclosure, the man-hours for removing the exterior cover can be reduced as compared with a case where the rotation shaft portion of the exterior unit is formed on the exterior cover.

With the document transport device according to the fifth aspect of the present disclosure, the rigidity of the shaft can be improved as compared with a case where the base end portion of the rotation shaft portion is connected to a plate-shaped portion.

With the document transport device according to the sixth aspect of the present disclosure, appearance quality can be improved as compared with a case where the attachment tool is visible in a state in which the exterior unit is moved to the first position.

With the document transport device according to the seventh aspect of the present disclosure, the man-hours for removing the exterior cover can be reduced as compared with a case where the attachment tool is invisible and is not attachable and detachable in a state in which the exterior unit is moved to the second position.

With the document transport device according to the eighth aspect of the present disclosure, the tension spring can remain on the guide member even in a case where the exterior cover is removed.

With the document transport device according to the ninth aspect of the present disclosure, the man-hours for removing the exterior cover can be reduced as compared with a case where the attachment tool attaches the exterior cover to the guide member in a plurality of directions.

With the document transport device according to the tenth aspect of the present disclosure, the man-hours for removing the exterior cover can be reduced as compared with a case where the restricting mechanism is attached to the exterior cover.

With the image forming apparatus according to the eleventh aspect of the present disclosure, the maintainability can be improved as compared with a case where the image forming apparatus includes the document transport device in which the transport roll and the detection unit are all attached to the exterior cover.

### BRIEF DESCRIPTION OF THE DRAWINGS

Exemplary embodiment(s) of the present invention will be described in detail based on the following figures, wherein:
Fig. 1 is a schematic configuration diagram showing an image forming apparatus according to an exemplary embodiment of the present disclosure;
Fig. 2 is a schematic configuration diagram showing an image forming unit provided in the image forming apparatus according to the exemplary embodiment of the present disclosure;
Fig. 3 is a perspective view showing an entire document transport device according to the exemplary embodiment of the present disclosure;
Fig. 4 is an overall sectional view showing the document transport device according to the exemplary embodiment of the present disclosure;
Fig. 5 is a perspective view showing an exterior unit provided in the document transport device according to the exemplary embodiment of the present disclosure and capable of opening a transport path;
Fig. 6 is an exploded perspective view showing the exterior unit provided in the document transport device according to the exemplary embodiment of the present disclosure; and
Figs. 7A and 7B are configuration diagrams showing a configuration in which a transport roll is biased against an opposing transport roll in the document transport device according to the exemplary embodiment of the present disclosure.

### DETAILED DESCRIPTION OF THE INVENTION

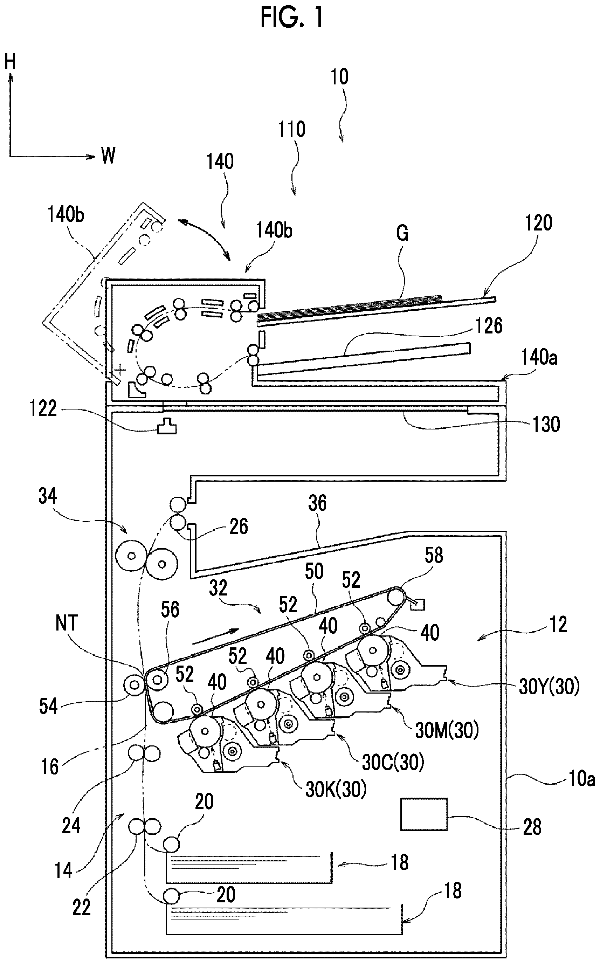

An example of a document transport device and an image forming apparatus according to an exemplary embodiment of the present disclosure will be described with reference to Figs. 1 to 7. An arrow H shown in each drawing indicates an apparatus up-down direction, which is a vertical direction, an arrow W indicates an apparatus width direction, which is orthogonal to the arrow H and is a horizontal direction, and an arrow D indicates an apparatus depth direction, which is orthogonal to the arrows H and W and is a horizontal direction.

### (Overall Configuration of Image Forming Apparatus)

As shown in Fig. 1, an image forming apparatus 10 includes an image reading device 110 that reads an image formed on a document G, an image forming section 12 that forms a toner image using an electrophotographic method, and a transport section 14 that transports a recording medium P along a transport path 16. In addition, the image forming apparatus 10 includes a plurality of accommodating members 18 that accommodate the recording medium P, and a control unit 28 that controls the entire apparatus.

In the image forming apparatus 10 having the above configuration, the image formed on the document G is read by the image reading device 110. In addition, the recording medium P accommodated in the accommodating member 18 by the transport section 14 is transported along the transport path 16. Further, the toner image formed by the image forming section 12 is formed on the transported recording medium P, and the recording medium P on which the toner image is formed is discharged to an outside of an apparatus body 10a.

### [Image Forming Section 12]

As shown in Fig. 1, the image forming section 12 includes a plurality of toner image forming units 30 that form toner images of respective colors, and a transfer unit 32 that transfers the toner images formed by the toner image forming units 30 onto the recording medium P. Further, the image forming section 12 includes a fixing device 34 that fixes, onto the recording medium P, the toner image transferred onto the recording medium P by the transfer unit 32.

### -Toner Image Forming Unit 30-

The plurality of toner image forming units 30 are provided to form toner images for respective colors. In the present exemplary embodiment, the toner image forming units 30 for a total of four colors of yellow (Y), magenta (M), cyan (C), and black (K) are provided. In the following description, in a case where there is no need to distinguish between yellow (Y), magenta (M), cyan (C), and black (K), Y, M, C, and K attached as the reference numerals are omitted.

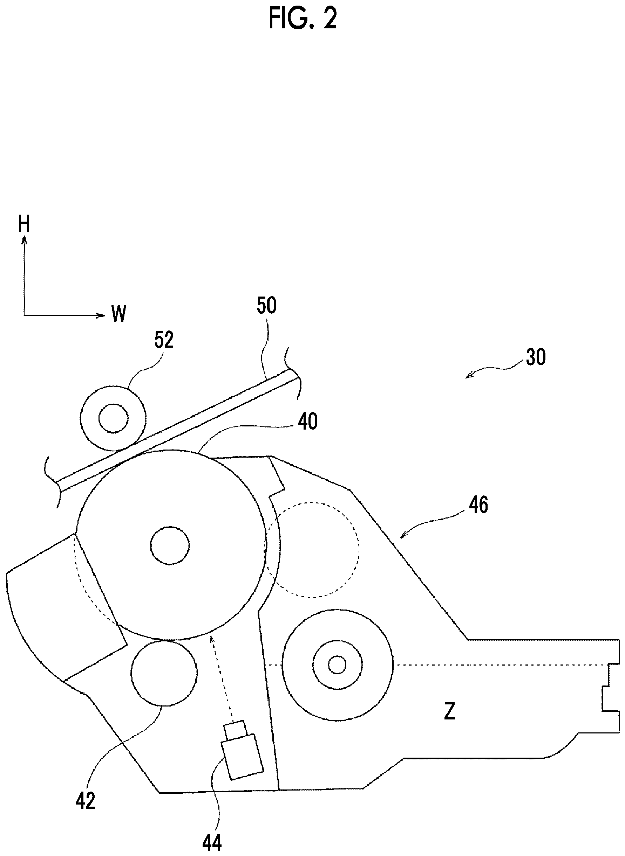

The toner image forming units 30 of respective colors have basically the same configuration except for a toner to be used and, as shown in Fig. 2, each includes a rotating cylindrical image holding body 40 and a charger 42 that charges the image holding body 40. Further, the toner image forming unit 30 includes an exposure device 44 that irradiates the charged image holding body 40 with exposure light to form an electrostatic latent image, and a developing device 46 that develops the electrostatic latent image with a developer Z containing a toner as a toner image. As a result, the toner image forming unit 30 of each color forms an image of each color using a toner of each color.

In addition, as shown in Fig. 1, the image holding body 40 of each color is in contact with a transfer belt 50 (details to be described below) that moves circumferentially. In a circumferential direction (see an arrow in the drawing) of the transfer belt 50, the yellow (Y), magenta (M), cyan (C), and black (K) toner image forming units 30 are arranged in turn from an upstream side.

### -Transfer Unit 32-

As shown in Fig. 1, the transfer unit 32 includes the transfer belt 50, and primary transfer rolls 52 each of which is disposed on an opposite side of the image holding body 40 of each color with the transfer belt 50 interposed therebetween and transfers a toner image formed on the image holding body 40 of each color onto the transfer belt 50.

In addition, the transfer unit 32 includes a winding roll 56 around which the transfer belt 50 is wound, and a drive roll 58 around which the transfer belt 50 is wound and which transmits a rotational force to the transfer belt 50. As a result, the transfer belt 50 is circumferentially driven in an arrow direction in the drawing.

Further, the transfer unit 32 includes a secondary transfer roll 54 that is disposed on an opposite side of the winding roll 56 with the transfer belt 50 interposed therebetween and transfers, onto the recording medium P, the toner image transferred onto the transfer belt 50. A transfer nip NT where the toner image is transferred onto the recording medium P is formed between the secondary transfer roll 54 and the transfer belt 50.

In this configuration, the toner image is primarily transferred onto the transfer belt 50 by the primary transfer rolls 52 in order of yellow (Y), magenta (M), cyan (C), and black (K). In addition, the toner image is transferred from the transfer belt 50 by the secondary transfer roll 54 onto the recording medium P transported while being interposed between the transfer belt 50 and the secondary transfer roll 54. Further, the recording medium P onto which the toner image is transferred is transported toward the fixing device 34.

### -Fixing Device 34-

As shown in Fig. 1, the fixing device 34 is disposed on a downstream side of the transfer nip NT in a transport direction of the recording medium P. The fixing device 34 heats and pressurizes the toner image transferred onto the recording medium P and fixes the toner image onto the recording medium P.

### [Transport Section 14]

As shown in Fig. 1, the transport section 14 includes a feeding roll 20 that feeds the recording medium P accommodated in the accommodating member 18 to the transport path 16, and a prevention roll 22 that prevents double-feeding of the recording medium P fed by the feeding roll 20. Further, the transport section 14 includes an adjustment roll 24 that adjusts a timing of the recording medium P to be fed to the transfer nip NT, and a discharge roll 26 that discharges the recording medium P onto which a toner image is fixed by the fixing device 34 to the outside of the apparatus body 10a.

### [Image Reading Device 110]

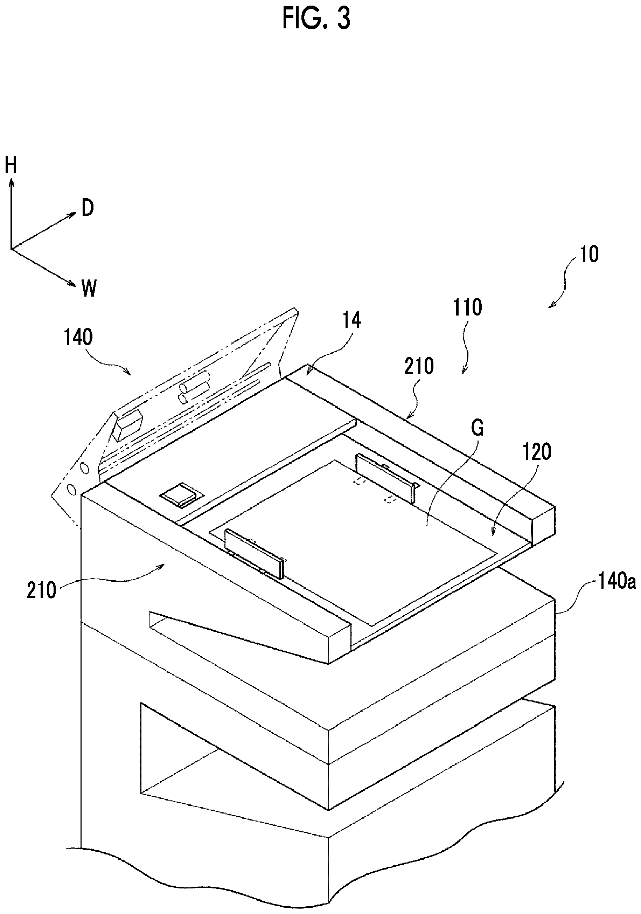

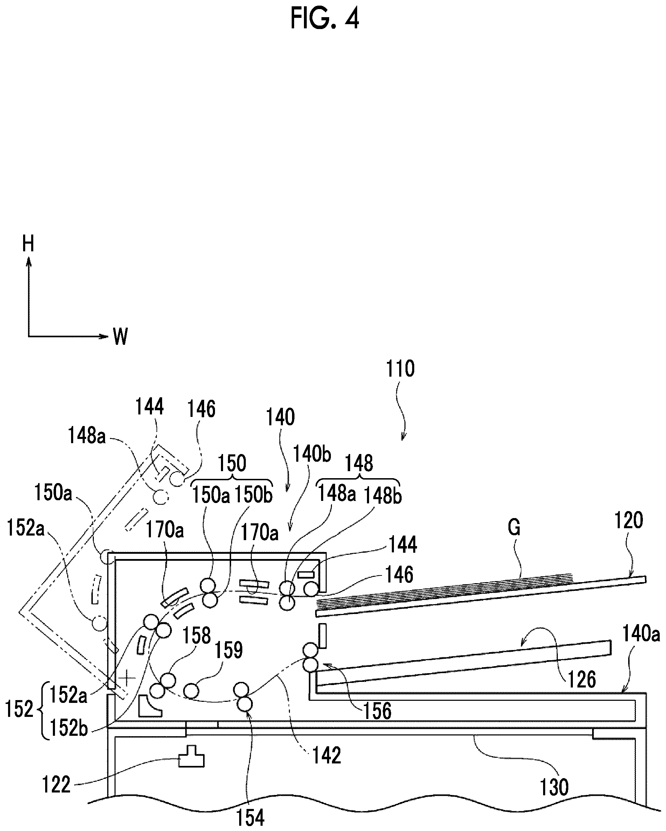

As shown in Fig. 3, the image reading device 110 is disposed in an upper part of the image forming apparatus 10. As shown in Fig. 4, the image reading device 110 includes a placing table 120, which is used in a case where images of a plurality of documents G are read, on which the document G is placed, and a document transport section 140 that is disposed on one side (left side in the drawing) of the placing table 120 in a width direction and that transports the document G. In addition, the image reading device 110 includes a platen glass 130, which is used in a case of reading an image of one document G, on which the document G is placed. A body 140a in which the above-described document transport section 140 is disposed opens or closes the platen glass 130. The body 140a is an example of a device body.

Further, the image reading device 110 includes a reading unit 122 that reads the image of the document G transported by the document transport section 140 at a predetermined position and reads the image of the document G placed on the platen glass 130 while moving, and a discharge unit 126 that discharges the document G of which the image has been read by the reading unit 122 and is disposed on a lower side of the placing table 120. The reading unit 122 is an example of a reading device.

### (Major Configuration)

Next, the document transport section 140 will be described. As shown in Fig. 4, the document transport section 140 is disposed on one side of the placing table 120 in the width direction. The document transport section 140 is an example of a document transport device.

Inside the document transport section 140, a U-shaped transport path 142 that is open on a side of the placing table 120 as viewed in the depth direction is formed. The document transport section 140 includes a detection sensor 144 that detects a height of the placing table 120 on which the document G is placed, a feeding roll 146 that feeds the document G placed on the placing table 120 to the transport path 142, and a double-feeding prevention roll pair 148 that prevents double-feeding of the document G. Further, the document transport section 140 includes transport roll pairs 150, 152, 154, 156, and 158 and a transport roll 159 that transport the document G along the transport path 142.

In addition, the document transport section 140 includes an exterior unit 140b that is rotationally moved with respect to the body 140a of the document transport section 140 to open an upstream portion of the transport path 142.

### [Detection Sensor 144 and Feeding Roll 146]

As shown in Fig. 4, the detection sensor 144 is disposed above a leading end portion of the document G placed on the placing table 120 on a side closer to the document transport section 140. The feeding roll 146 has an axial direction thereof as the depth direction and is disposed above the leading end portion of the document G placed on the placing table 120 on the side closer to the document transport section 140. The detection sensor 144 and the feeding roll 146 are disposed outside the U-shaped transport path 142. Here, the outside of the U-shaped transport path 142 refers to an outside of a portion surrounded by the U shape. The detection sensor 144 is an example of a detection unit.

As a result, the feeding roll 146 feeds the document G placed on the placing table 120 whose position in the height direction is detected by the detection sensor 144, to the transport path 142.

### [Double-Feeding Prevention Roll Pair 148]

As shown in Fig. 4, the double-feeding prevention roll pair 148 has an axial direction thereof as the depth direction and is disposed on a downstream side of the feeding roll 146 in the transport direction of the document G (hereinafter, referred to as a "document transport direction"). The double-feeding prevention roll pair 148 includes a transport roll 148a disposed on the outside of the U-shaped transport path 142 and a transport roll 148b disposed on an inside of the U-shaped transport path 142. The transport roll 148a functions as a driven roll, and the transport roll 148b functions as a drive roll. Here, the inside of the U-shaped transport path 142 refers to a portion surrounded by the U shape.

The double-feeding prevention roll pair 148 rotates in a case where one document G is transported between the double-feeding prevention roll pair 148 and the feeding roll 146. In a case where two or more overlapping documents G are to be transported, slippage is generated between the documents G, so that the double-feeding prevention roll pair 148 transports only one document G.

### [Transport Roll Pairs 150, 152, 154, and 156]

As shown in Fig. 4, the transport roll pairs 150, 152, 154, and 156 are disposed on a downstream side of the double-feeding prevention roll pair 148 in the document transport direction, and are arranged from an upstream side to a downstream side of the transport path 142 in the document transport direction in this order. The transport roll pairs 150 and 152 are disposed in a portion on the upstream side of the transport path 142 in the document transport direction, and the transport roll pairs 154 and 156 are disposed in a portion on the downstream side of the transport path 142 in the document transport direction.

The transport roll pair 150 includes a transport roll 150a disposed on the outside of the U-shaped transport path 142 and a transport roll 150b disposed on the inside of the U-shaped transport path 142. The transport roll 150a functions as a driven roll, and the transport roll 150b functions as a drive roll. The transport roll 150b is an example of another transport roll.

The transport roll pair 152 includes a transport roll 152a disposed on the outside of the U-shaped transport path 142 and a transport roll 152b disposed on the inside of the U-shaped transport path 142. The transport roll 152a functions as a driven roll, and the transport roll 152b functions as a drive roll. The transport roll 152b is an example of another transport roll.

### [Exterior Unit 140b]

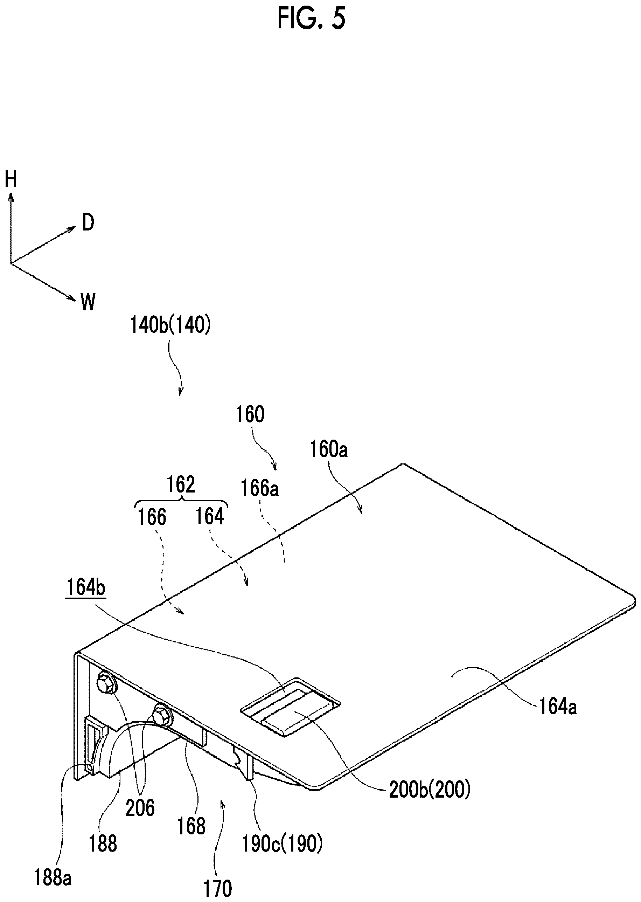

As shown in Fig. 5, the exterior unit 140b includes an exterior cover 160 on which an exterior surface 160a exposed to the outside is formed, and a guide member 170 on which the exterior cover is attached and that has a guide part 170a (see Fig. 4) formed to guide the document G along the transport path 142. Side units 210 (see Fig. 3) are disposed to interpose the exterior unit 140b therebetween in the depth direction.

### -Exterior Cover 160-

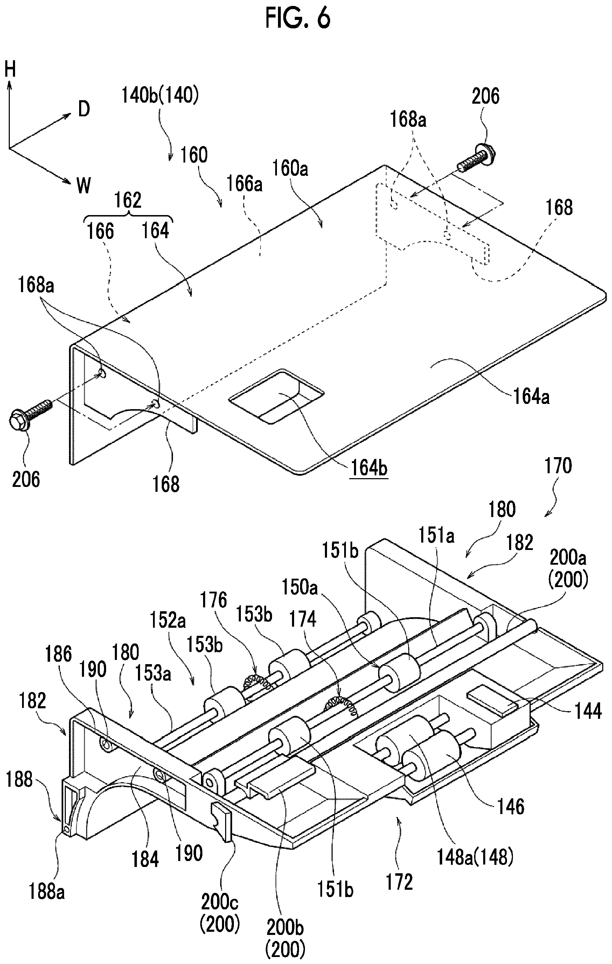

The exterior cover 160 is integrally formed of a resin material (in the present exemplary embodiment, for example, a polycarbonate ABS resin (PC-ABS)), and has a body part 162 that is L-shaped as viewed in the depth direction and an attachment rib 168 as shown in Fig. 6. A functional component is not attached to the exterior cover 160. Here, the functional component is a component that has an independent unit function and that acts on other components and members by receiving energy, such as a component such as a roll and a detection sensor.

The body part 162 has a plate-shaped top surface part 164 with a plate thickness direction thereof as the up-down direction and a plate-shaped side surface part 166 with a plate thickness direction thereof as the width direction. A top surface 164a, which is a part of the exterior surface 160a, is formed on the top surface part 164, and a side surface 166a, which is the other part of the exterior surface 160a, is formed on the side surface part 166. The top surface part 164 is an example of an upper part.

In addition, the top surface part 164 is formed with a through portion 164b that is recessed with respect to the top surface 164a, penetrates front and back surfaces, and exposes a handle 200b, which will be described below, to the outside.

A pair of the attachment ribs 168 have a plate thickness direction thereof as the depth direction, and are provided to be spaced apart from each other in the depth direction and are disposed to be interposed between the top surface part 164 and the side surface part 166. The attachment ribs 168 are each formed with attachment holes 168a penetrating front and back surfaces and arranged in the width direction.

### -Entirety of Guide Member 170-

The guide member 170 is integrally formed of a resin material (in the present exemplary embodiment, for example, a polycarbonate ABS resin (PC-ABS)), and is disposed on a lower side of the top surface part 164 and on the other side (right side in the drawing) of the side surface part 166 in the width direction as shown in Fig. 6.

The guide member 170 includes a body part 172 that is disposed to face the transport path 142 (see Fig. 4) and that has the guide part 170a (see Fig. 4) formed to guide the document G, a standing part 180 that stands from both end portions of the body part 172 in the depth direction toward the exterior cover 160, and a rotation shaft portion 188 in which a shaft 188a of the exterior unit 140b is formed. The depth direction is an example of the cross direction.

### -Body Part 172 of Guide Member 170-

The body part 172 is formed to cover the upstream portion of the transport path 142 (see Fig. 4) in the document transport direction from the upper side and from one side in the width direction. In addition, a plurality of through-holes penetrating front and back surfaces are formed in the body part 172. As shown in Fig. 6, the detection sensor 144, the feeding roll 146, the transport roll 148a of the double-feeding prevention roll pair 148, the transport roll 150a, and the transport roll 152a are attached to the guide member 170 so as to be exposed to the transport path 142 side through the through-holes.

Further, a biasing spring 174 that biases the transport roll 150a against the transport roll 150b (see Fig. 4) and a biasing spring 176 that biases the transport roll 152a against the transport roll 152b (see Fig. 4) are attached to the body part 172.

The transport roll 150a includes a shaft portion 151a and a cylindrical cylinder portion 151b into which the shaft portion 151a is inserted. A plurality of the cylinder portions 151b are provided and are rotatably supported by the shaft portion 151a.

The transport roll 152a includes a shaft portion 153a and a cylindrical cylinder portion 153b into which the shaft portion 153a is inserted. A plurality of the cylinder portions 153b are provided and are rotatably supported by the shaft portion 153a.

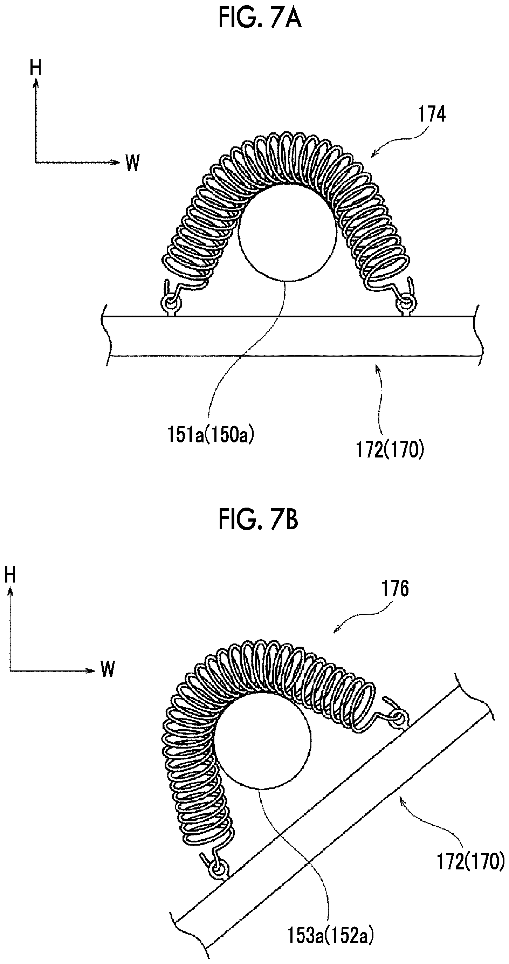

As shown in Fig. 7A, the biasing spring 174 applies a biasing force to the transport roll 150a by bending a tension coil spring into a U shape with an open bottom. Specifically, both end portions of the biasing spring 174 are attached to the body part 172. In this way, by using the biasing spring 174, even though the exterior cover 160 is removed after the biasing force is applied to the transport roll 150a, the biasing spring 174 remains on the guide member 170 side. The biasing spring 174 is an example of a tension spring.

As shown in Fig. 7B, the biasing spring 176 applies a biasing force to the transport roll 152a by bending a tension coil spring into a U shape with an open bottom. Specifically, both end portions of the biasing spring 176 are attached to the body part 172. In this way, by using the biasing spring 176, even though the exterior cover 160 is removed after the biasing force is applied to the transport roll 152a, the biasing spring 176 remains on the guide member 170 side. The biasing spring 176 is an example of a tension spring.

### -Standing Part 180 of Guide Member 170-

A pair of the standing parts 180 are provided in a pair to be spaced apart from each other in the depth direction, and are disposed to interpose the body part 172 therebetween in the depth direction as shown in Fig. 6. A plate thickness direction of the standing part 180 is largely the depth direction, and in the standing part 180, a box portion 182 formed in a box shape which is open on the outside in the depth direction is formed on the side surface part 166 side of the exterior cover 160. The box portion 182 has a bottom plate 184 and a flange portion 186 that stands outwardly in the depth direction at an edge portion of the bottom plate 184. The flange portion 186 is integrally formed along the top surface part 164 and the side surface part 166 of the exterior cover 160, and is formed in an L shape as viewed in the depth direction. Specifically, the flange portion 186 that is formed in an L shape is in surface contact with a back surface of the top surface part 164 and a back surface of the side surface part 166.

Further, a pair of embossed portions 190 arranged in the width direction are formed inside the box portion 182. In this configuration, a screw 206 is inserted into the attachment hole 168a of the exterior cover 160 from the outside in the width direction and is tightened into the embossed portion 190, so that the exterior cover 160 is attached to the guide member 170. As described above, the exterior cover 160 is attached to the guide member 170 by tightening the screw 206 into the embossed portion 190 from the outside in the width direction. In other words, the exterior cover 160 is attached to the guide member 170 only from the side surface. The attachment of the exterior cover 160 is not limited to only one direction. The screw 206 is an example of an attachment tool.

### -Rotation Shaft Portion 188 of Guide Member 170-

A pair of the rotation shaft portions 188 including the shaft 188a of the exterior unit 140b are provided to be spaced apart from each other in the depth direction, and protrude downward from the box portion 182, and the shaft 188a serving as a rotation shaft are formed at a distal end portion of the rotation shaft portion 188 as shown in Fig. 6. In other words, a base end portion of the rotation shaft portion 188 is connected to the box portion 182, and the shaft 188a is formed at the distal end portion of the rotation shaft portion 188. Here, the shaft is a concept including a cylindrical shaft and a bearing, and is a portion constituting the rotation shaft of the exterior unit 140b.

In this configuration, the exterior unit 140b rotates about the shaft 188a, and the exterior unit 140b rotates and moves between a first position (solid line shown in Figs. 3 and 4) at which the transport path 142 is covered and the document G can be transported along the transport path 142, and a second position (two-dot chain line shown in Figs. 3 and 4) at which the upstream portion of the transport path 142 is opened.

Then, the screw 206 is invisible from the outside in a state in which the exterior unit 140b is moved to the first position. Further, the screw 206 is visible from the outside and is attachable and detachable in a state in which the exterior unit 140b is moved to the second position. For a plurality of the screws 206, in a state in which the exterior unit 140b is moved to the first position, all the screws 206 do not have to be invisible from the outside. That is, a positional relationship may be such that a part of the screws are invisible and the other screws are visible.

### -Others-

Next, a restricting mechanism 200 that restricts the rotation of the exterior unit 140b will be described.

The restricting mechanism 200 is attached to the guide member 170, and includes a rod 200a that is hung on the pair of standing parts 180 and extends in the depth direction, and a handle 200b that is attached to a front side portion of the rod 200a in the depth direction as shown in Fig. 6. Further, the restricting mechanism 200 includes a latch 200c that is provided at an end portion on a front side of the rod 200a in the depth direction and outside the standing part 180, and a biasing member (not shown) that biases the latch 200c.

In a state in which the exterior unit 140b is moved to the first position, the latch 200c is engaged with an engagement portion (not shown). The biasing member biases the latch 200c such that the engagement state is maintained. As described above, as shown in Fig. 5, the handle 200b is exposed to the outside from the through portion 164b formed in the top surface part 164.

In this configuration, in a state in which the exterior unit 140b is moved to the first position, in a case where a user grasps the handle 200b and rotates the rod 200a, the latch 200c also rotates. As a result, the engagement between the latch 200c and the engagement portion is released, and the restriction on the movement of the exterior unit 140b to the second position is released.

### (Effect of Major Configuration)

Next, work of removing only the exterior cover 160 from the body 140a will be described. In an initial state of the exterior unit 140b, the exterior unit 140b is moved to the first position.

In a case where the exterior cover 160 is removed, the user grasps the handle 200b and rotates the rod 200a. As a result, the latch 200c also rotates, and the engagement between the latch 200c and the engagement portion is released.

Further, the user rotates the exterior unit 140b about the shaft 188a to move the exterior unit 140b to the second position. In this state, the screw 206 is removed from both sides in the depth direction, and then the exterior cover 160 is removed from the guide member 170.

Here, functional components such as the transport roll and the detection sensor are not attached to the exterior cover 160. In other words, there is no need to remove the functional components from the exterior cover 160. Therefore, the work of removing only the exterior cover 160 is completed. That is, the work of removing only the exterior cover 160 from the body 140a is completed without removing the guide member 170 from the body 140a.

### (Summary)

As described above, in the document transport section 140, at least one of the transport rolls 150a, the transport roll 152a, or the detection sensor 144 is attached to the guide member 170. Therefore, the man-hours for removing only the exterior cover 160 are reduced as compared with a case where the transport roll and the detection sensor are all attached to the exterior cover.

In addition, in the document transport section 140, the box portion 182 that is open on the outside in the depth direction is formed in the standing part 180. Therefore, the rigidity of the standing part 180 is improved as compared with a case where the entire standing part is plate-shaped.

In addition, in the document transport section 140, the box portion 182 has the bottom plate 184 with the plate thickness direction thereof as the depth direction, and the flange portion 186 that stands from the edge portion of the bottom plate 184 and is formed in an L shape. As a result, the rigidity of the standing part is improved as compared with a case where the L-shaped flange portions are spaced apart from each other at corner portions.

In addition, in the document transport section 140, the rotation shaft portion 188 of the exterior unit 140b is formed in the guide member 170. As a result, the man-hours for removing only the exterior cover 160 are reduced as compared with a case where the rotation shaft portion of the exterior unit is formed on the exterior cover.

In addition in the document transport section 140, the base end portion of the rotation shaft portion 188 is connected to the box portion 182, and the shaft 188a is provided at the distal end portion of the rotation shaft portion 188. As a result, the rigidity of the shaft is improved as compared with a case where the rotation shaft portion is connected to the plate-shaped portion.

In addition in the document transport section 140, the screw 206 is invisible from the outside in a state in which the exterior unit 140b is moved to the first position. As a result, the appearance quality is improved as compared with a case where the screw is visible in a state in which the exterior unit is moved to the first position.

In addition, in the document transport section 140, the screw 206 is visible from the outside and is attachable and detachable in a state in which the exterior unit 140b is moved to the second position. As a result, the man-hours for removing the exterior cover 160 are reduced as compared with a case where the screw is invisible and is not attachable and detachable in a state in which the exterior unit is moved to the second position.

In addition, in the document transport section 140, both end portions of the biasing springs 174 and 176 are attached to the body part 172. As a result, the biasing springs 174 and 176 remain on the guide member 170 even in a case where the exterior cover 160 is removed.

In addition, in the document transport section 140, the screw 206 attaches the exterior cover 160 to the guide member 170 only from the outside in the width direction. As a result, the man-hours for removing the exterior cover 160 are reduced as compared with a case where the screw attaches the exterior cover to the guide member in a plurality of directions.

In addition, in the document transport section 140, the restricting mechanism 200 is attached to the guide member 170. As a result, the man-hours for removing the exterior cover 160 are reduced as compared with a case where the restricting mechanism is attached to the exterior cover.

In addition, the image forming apparatus 10 includes the document transport section 140. As a result, the maintainability is improved.

Although the specific exemplary embodiments of the present disclosure are described in detail, the exemplary embodiment of the present disclosure is not limited to such exemplary embodiments, and it is apparent to those skilled in the art that various other exemplary embodiments can be taken within the scope of the present disclosure. For example, in the above-described exemplary embodiment, the document transport section 140 is provided in the image forming apparatus 10, but the document transport section 140 may be provided in a single scanner unit or the like.

In addition, in the above-described exemplary embodiment, all the functional components are attached to the guide member 170, and the functional components are not attached to the exterior cover 160, but any functional component may be attached to the exterior cover. At least one of the transport roll 150a, the transport roll 152a, or the detection sensor 144 need only be attached to the guide member 170. However, in this case, the effect produced by the fact that the functional component is not attached to the exterior cover 160 is not achieved.

In addition, in the above-described exemplary embodiment, the box portion 182 is formed in the standing part 180, but the box portion does not have to be formed. In this case, the effect produced by the fact that the box portion 182 is formed is not achieved.

In addition, in the above-described exemplary embodiment, the rotation shaft portion 188 is formed on the guide member 170, but the rotation shaft portion may be formed on the exterior cover. In this case, the effect produced by the fact that the rotation shaft portion 188 is formed on the guide member 170 is not achieved.

In addition, in the above-described exemplary embodiment, the base end portion of the rotation shaft portion 188 is connected to the box portion 182, but the rotation shaft portion may be disposed at a position spaced apart from the box portion. In this case, the effect produced by the fact that the base end portion of the rotation shaft portion 188 is connected to the box portion 182 is not achieved.

In addition, in the above-described exemplary embodiment, the screw 206 is invisible from the outside in a state in which the exterior unit 140b is moved to the first position, but the screw 206 may be visible. However, in this case, the effect produced by the fact that the screw is invisible is not achieved.

In addition, in the above-described exemplary embodiment, the screw 206 is used as the attachment tool, but a bolt, a clip, or the like may be used.
(((1))) A document transport device comprising:
   a guide member that is disposed on one side of a transport path along which a document placed on a placing table is transported and that has a guide part formed to guide the document along the transport path, and to which at least one of a transport roll that transports the document along the transport path or a detection unit that detects a position of the placing table is attached; and
   an exterior cover that is attached to cover the guide member and has an exterior surface exposed to an outside.
(((2))) The document transport device according to (((1))),
   wherein the guide member includes
   a body part that is disposed to face the transport path, and
   a standing part that stands from both end portions of the body part toward the exterior cover in a cross direction crossing a transport direction in which the document is transported and that has a box portion formed in a box shape which is open in the cross direction.
(((3))) The document transport device according to (((2))),
   wherein the exterior cover has a plate-shaped upper part that covers the guide member from above and on which a part of the exterior surface is formed, and a plate-shaped side part that extends downward from an end portion of the upper part and that covers the guide member from a side, and on which the other part of the exterior surface is formed, and
   the box portion has a bottom plate of which a plate thickness direction is the cross direction and an L-shaped flange portion that stands from an edge portion of the bottom plate and that extends along the upper part and the side part.
(((4))) The document transport device according to any one of (((1))) to (((3))),
   wherein an exterior unit including the guide member and the exterior cover is configured,
   the exterior unit is rotatably attached to a device body and is rotationally moved between a first position at which the document is transportable along the transport path and a second position at which the transport path is opened, and
   a rotation shaft portion of the exterior unit is formed in the guide member.
(((5))) The document transport device according to (((4))),
   wherein the guide member includes
      a body part that is disposed to face the transport path, and
      a standing part that stands from both end portions of the body part toward the exterior cover in a cross direction crossing a transport direction in which the document is transported and that has a box portion formed in a box shape which is open in the cross direction, and
   a base end portion of the rotation shaft portion is connected to the box portion, and a shaft is formed at a distal end portion of the rotation shaft portion.
(((6))) The document transport device according to (((4))) or (((5))),
   wherein an attachment tool that attaches the exterior cover to the guide member is invisible from the outside in a state in which the exterior unit is moved to the first position.
(((7))) The document transport device according to (((6))),
   wherein the attachment tool is visible from the outside and is attachable and detachable in a state in which the exterior unit is moved to the second position.
(((8))) The document transport device according to any one of (((1))) to (((7))),
   wherein the transport roll is attached to the guide member and is disposed on an exterior cover side with respect to the transport path, and
   the document transport device further comprises a tension spring that is wound around the transport roll and has both end portions attached to the guide member so that a tensile force acts on the transport roll and that biases the transport roll against another transport roll disposed on an opposite side of the transport roll with respect to the transport path.
(((9))) The document transport device according to any one of (((1))) to (((8))), further comprising:
   an attachment tool that attaches the exterior cover to the guide member,
   wherein the attachment tool attaches the exterior cover to the guide member only in a cross direction crossing a transport direction in which the document is transported.
(((10))) The document transport device according to any one of (((4))) to (((7))),
   wherein a restricting mechanism that restricts or releases movement of the exterior unit, which has moved to the first position, to the second position is provided, and
   the restricting mechanism, the transport roll, and the detection unit are attached to the guide member.
(((11))) An image forming apparatus comprising:
   the document transport device according to any one of (((1))) to (((10)));
   a reading device that reads the document transported by the document transport device; and
   an image forming unit that forms an image read by the reading device.

With the document transport device according to (((1))), man-hours for removing the exterior cover can be reduced as compared with a case where the transport roll and the detection unit are all attached to the exterior cover.

With the document transport device according to (((2))), the rigidity of the standing part can be improved as compared with a case where the entire standing part is plate-shaped.

With the document transport device according to (((3))), the rigidity of the standing part can be improved as compared with a case where the L-shaped flange portions are spaced apart from each other at corner portions.

With the document transport device according to (((4))), the man-hours for removing the exterior cover can be reduced as compared with a case where the rotation shaft portion of the exterior unit is formed on the exterior cover.

With the document transport device according to (((5))), the rigidity of the shaft can be improved as compared with a case where the base end portion of the rotation shaft portion is connected to a plate-shaped portion.

With the document transport device according to (((6))), appearance quality can be improved as compared with a case where the attachment tool is visible in a state in which the exterior unit is moved to the first position.

With the document transport device according to (((7))), the man-hours for removing the exterior cover can be reduced as compared with a case where the attachment tool is invisible and is not attachable and detachable in a state in which the exterior unit is moved to the second position.

With the document transport device according to (((8))), the tension spring can remain on the guide member even in a case where the exterior cover is removed.

With the document transport device according to (((9))), the man-hours for removing the exterior cover can be reduced as compared with a case where the attachment tool attaches the exterior cover to the guide member in a plurality of directions.

With the document transport device according to (((10))), the man-hours for removing the exterior cover can be reduced as compared with a case where the restricting mechanism is attached to the exterior cover.

With the image forming apparatus according to (((11))), the maintainability can be improved as compared with a case where the image forming apparatus includes the document transport device in which the transport roll and the detection unit are all attached to the exterior cover.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image forming apparatus
12: image forming section
120: placing table
122: reading unit (example of reading device)
140: document transport section (example of document transport device)
140a: body (example of device body)
140b: exterior unit
142: transport path
144: detection sensor (example of detection unit)
150a: transport roll
150b: transport roll (example of another transport roll)
152a: transport roll
152b: transport roll (example of another transport roll)
160: exterior cover
160a: exterior surface
164: top surface part (example of upper part)
166: side surface part
170: guide member
170a: guide part
174: biasing spring (example of tension spring)
176: biasing spring (example of tension spring)
172: body part
180: standing part
182: box portion
184: bottom plate
186: flange portion
188: rotation shaft portion
188a: shaft
200: restricting mechanism
206: screw (example of attachment tool)

## Claims

1. A document transport device comprising:
a guide member that is disposed on one side of a transport path along which a document placed on a placing table is transported and that has a guide part formed to guide the document along the transport path, and to which at least one of a transport roll that transports the document along the transport path or a detection unit that detects a position of the placing table is attached; and
an exterior cover that is attached to cover the guide member and has an exterior surface exposed to an outside.

2. The document transport device according to claim 1,
wherein the guide member includes
a body part that is disposed to face the transport path, and
a standing part that stands from both end portions of the body part toward the exterior cover in a cross direction crossing a transport direction in which the document is transported and that has a box portion formed in a box shape which is open in the cross direction.

3. The document transport device according to claim 2,
wherein the exterior cover has a plate-shaped upper part that covers the guide member from above and on which a part of the exterior surface is formed, and a plate-shaped side part that extends downward from an end portion of the upper part and that covers the guide member from a side, and on which the other part of the exterior surface is formed, and
the box portion has a bottom plate of which a plate thickness direction is the cross direction and an L-shaped flange portion that stands from an edge portion of the bottom plate and that extends along the upper part and the side part.

4. The document transport device according to any one of claims 1 to 3,
wherein an exterior unit including the guide member and the exterior cover is configured,
the exterior unit is rotatably attached to a device body and is rotationally moved between a first position at which the document is transportable along the transport path and a second position at which the transport path is opened, and
a rotation shaft portion of the exterior unit is formed in the guide member.

5. The document transport device according to claim 4,
wherein the guide member includes
a body part that is disposed to face the transport path, and
a standing part that stands from both end portions of the body part toward the exterior cover in a cross direction crossing a transport direction in which the document is transported and that has a box portion formed in a box shape which is open in the cross direction, and
a base end portion of the rotation shaft portion is connected to the box portion, and a shaft is formed at a distal end portion of the rotation shaft portion.

6. The document transport device according to claim 4 or 5,
wherein an attachment tool that attaches the exterior cover to the guide member is invisible from the outside in a state in which the exterior unit is moved to the first position.

7. The document transport device according to claim 6,
wherein the attachment tool is visible from the outside and is attachable and detachable in a state in which the exterior unit is moved to the second position.

8. The document transport device according to any one of claims 1 to 7,
wherein the transport roll is attached to the guide member and is disposed on an exterior cover side with respect to the transport path, and
the document transport device further comprises a tension spring that is wound around the transport roll and has both end portions attached to the guide member so that a tensile force acts on the transport roll and that biases the transport roll against another transport roll disposed on an opposite side of the transport roll with respect to the transport path.

9. The document transport device according to any one of claims 1 to 8, further comprising:
an attachment tool that attaches the exterior cover to the guide member,
wherein the attachment tool attaches the exterior cover to the guide member only in a cross direction crossing a transport direction in which the document is transported.

10. The document transport device according to any one of claims 4 to 7,
wherein a restricting mechanism that restricts or releases movement of the exterior unit, which has moved to the first position, to the second position is provided, and
the restricting mechanism, the transport roll, and the detection unit are attached to the guide member.

11. An image forming apparatus comprising:
the document transport device according to any one of claims 1 to 10;
a reading device that reads the document transported by the document transport device; and
an image forming unit that forms an image read by the reading device.
